# EUROPEAN PATENT APPLICATION

(11) **EP 4 837 405 A1**
(43) Date of publication of application: **11.11.2026**
(21) Application number: 26172244.1
(22) Date of filing: 14.04.2026
(51) Int. Cl.: A01D 34/00, A01D 42/00, G05D 105/15

(54) **A METHOD IN A SELF-PROPELLED ROBOTIC LAWNMOWER AND A SELF-PROPELLED ROBOTIC LAWNMOWER**

(30) Priority: 08.05.2025 SE 2550447
(71) Applicant: Husqvarna AB, 561 82 Huskvarna (SE)
(72) Inventor: Holgersson, Jonas, 561 82 Huskvarna (SE); Bergström, Stefan, 561 82 Huskvarna (SE)

(57) **Abstract**

The present disclosure relates to a method for operating a self-propelled robotic lawnmower 1, being configured to operate in a work area 31, and comprising driving means 3, processing means 7, and a camera 11. A sub-field 37 within the work area 31 containing mulchable non-grass matter on the lawn is detected 51 using the camera. A border 34 of the sub-field 37 is defined 53. The lawn is processed 55, while substantially remaining inside the border 34, until a predetermined condition is met. Subsequently the sub-field is exited 57.

## Description

### Field of the invention

The present disclosure relates to a method in a self-propelled robotic lawnmower, configured to process a work area, and comprising driving means, processing means, and a camera.

The disclosure also concerns a corresponding self-propelled robotic lawnmower.

### Technical background

Such robotic lawnmowers are widely used to cut lawns. One general problem associated with such robotic lawnmowers is how to make them more versatile for use in a garden.

### Summary of the invention

One object of the present disclosure is therefore to provide a more versatile robotic lawnmower of the above-mentioned kind.

This object is achieved by means of a method as defined in claim 1. More specifically, in a method of the initially mentioned kind, the robotic lawnmower detects a sub-field within the work area containing mulchable non-grass matter on the lawn using the camera. A border of the sub-field is defined, and the robotic lawnmower processes the lawn, while substantially remaining inside the border, until a predetermined condition is met. Subsequently, the robotic lawnmower exits the sub-field. In most cases, the mulchable non-grass matter will consist of leaves, although other such matter is also conceivable.

With this method, the robotic lawnmower becomes capable of thoroughly processing a field of leaves, for instance, which have fallen on a lawn, and can mulch those leaves in an efficient manner. This gives the robotic lawnmower an additional function, in addition to mowing the lawn. While known lawnmowers have accidently processed leaves, for instance, such random mulching is often not efficient enough to keep up with leaves falling from a tree, and known lawnmowers have been overwhelmed, not processing leaves efficiently enough and/or producing large lumps of processed matter that cannot easily be absorbed by a lawn. With the present method however, a robotic lawnmower can process leaves efficiently enough to provide mulching into fine fragments that provide nutrients and organic matter to a lawn.

The predetermined condition may typically correspond to a processing time depending on the size of the sub-field, such that the robotic lawnmower remains within the area long enough to substantially process leaves or the like therein.

Alternatively, the predetermined condition may correspond to a processing state detected by means of the camera.

Typically, the mulchable non-grass matter is leaves, although other matter could be processed similarly.

After exiting the sub-field, the lawnmower may return to the field after a predetermined time. This facilitates, for instance, the successive processing of leaves falling from a tree during a time period.

The robotic lawnmower may initially receive a position indication for a sub-field containing mulchable non-grass matter. This allows a user to direct the lawnmower to an area with lots of leaves are present or could be predicted to fall.

The robotic lawnmower may also be configured to detect a trunk of a tree in an image received by the camera, and to subsequently visit an area containing the trunk to scan for mulchable non-grass matter. This allows the lawnmower to autonomously check and detect an area where leaves may be present during a part of the season.

The present disclosure also considers a corresponding self-propelled robotic lawnmower. Then, the lawnmower is generally configured to carry out the steps of the method.

### Brief description of the drawings

Fig 1 shows a self-propelled robotic lawnmower.
Fig 2 illustrates a self-propelled robotic lawnmower processing a work area.
Fig 3 illustrates the work area with a sub-field of leaves thereon.
Fig 4 illustrates processing of the sub-field, and fig 5 the condition after processing.
Fig 6 shows a basic flow chart for a method of the disclosure.
Fig 7 illustrates functional blocks in a lawnmower.

### Detailed description

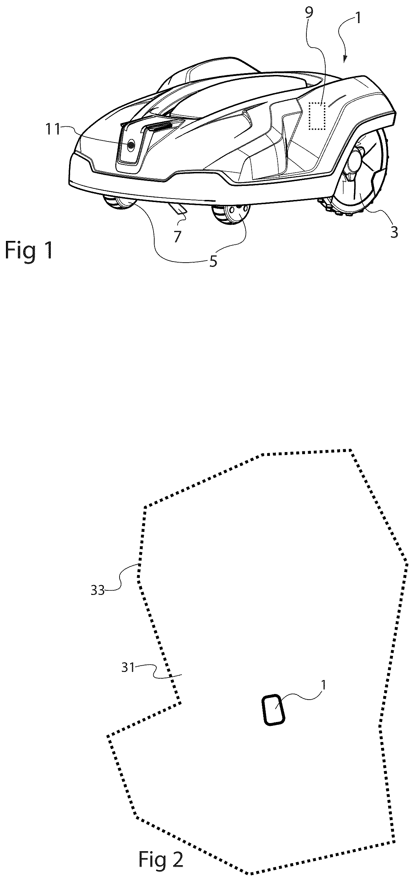

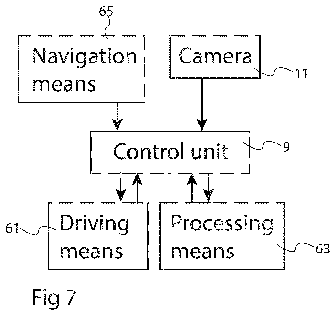

Self-propelled robotic lawnmowers 1, as shown with an example in fig 1, have become widely used. Functional blocks are illustrated in fig 7. Such lawnmowers 1 have driving means 61 (cf. fig 7) with at least one motor and often including rear driving wheels 3 and front swivelling wheels 5 although other driving configurations are available. Enclosed under a cover there is processing means 63 (cf. fig 7) with a cutting implement 7, such as a knife, visible in fig 1, and the driving and cutting is controlled by a control unit 9. The robotic lawnmower is provided with a camera 11 that can be used to avoid obstacles such as gardening tools or toys left on the lawn, for instance. This camera 11 will be used also for other purposes in this disclosure as will be discussed. The robotic lawnmower may also include navigation means 65 (cf. fig 7), such as based on satellite navigation, for instance.

Typically, as illustrated in fig 2, the robotic lawnmower 1 is configured to operate within a work area 31. In legacy-type robotic lawnmowers, this is accomplished by providing a boundary cable at the boundary 33 of the work area 31. The robotic lawnmower 1 may then be configured to sense a signal applied on the boundary cable in the proximity thereof and alter its heading, such that it remains within the work area 31.

It is also possible to provide the robotic lawnmower 1 with navigation means 65 (cf. fig 7) including enhanced satellite navigation technology or similar to make it capable of remaining within the work area 31 without a boundary cable.

While using robotic lawnmowers 1 of this type, it has been appreciated that, in addition to cutting the lawn, they may also process non-grass matter such as typically fallen leaves on the lawn. Sharp knives 7, rotating at high speed, mulch leaves into an almost pulverized substance that, unlike a leaf, is quickly absorbed by the lawn and acts similarly to a top dressing fertilizer, providing nutrients and protective organic matter to the lawn root system. Therefore, the user need not rake the leaves and may fertilize the lawn to a lesser extent as a consequence of the processing. In addition to leaves, other types of non-grass mulchable matter such as fine twigs could be processed in the same way.

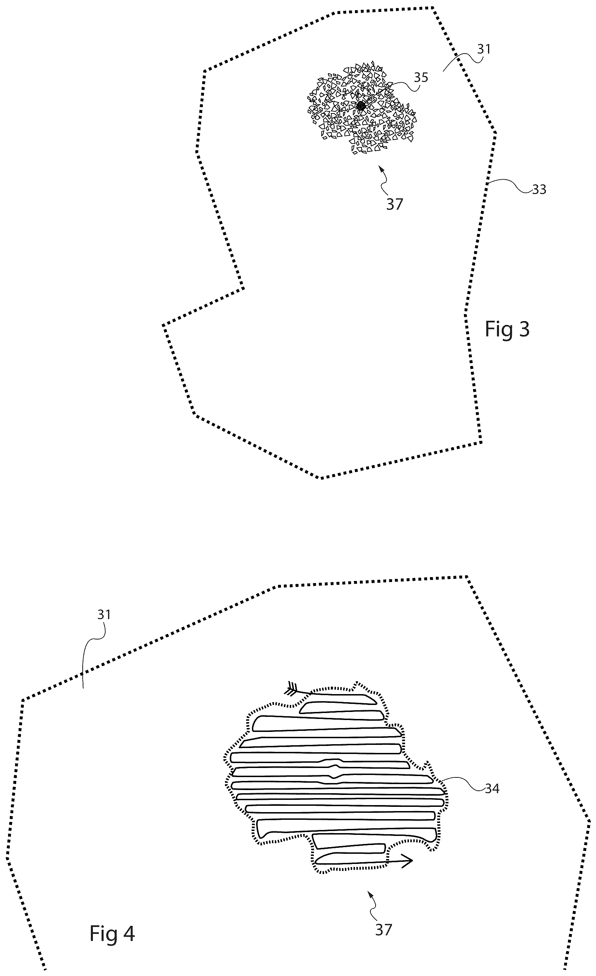

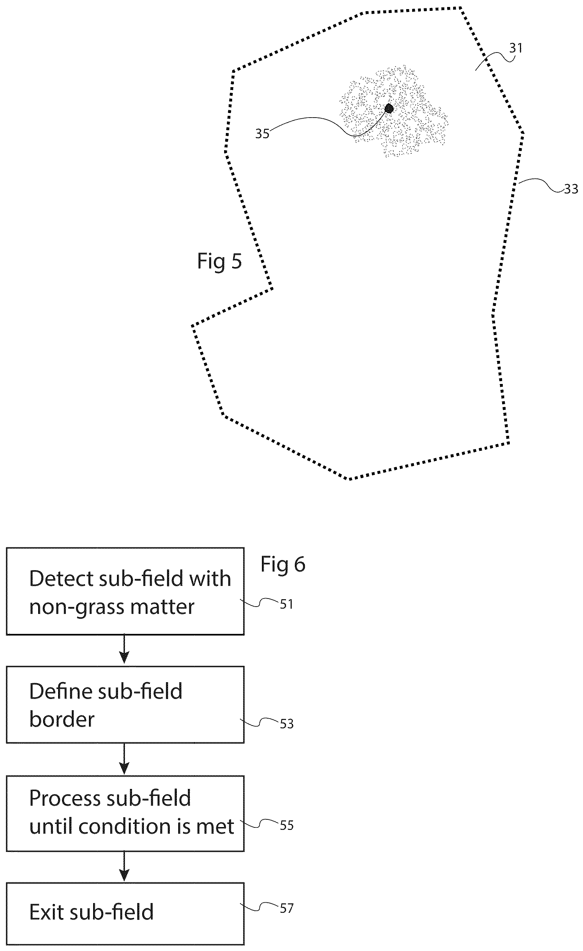

The present disclosure seeks to improve this additional advantage of robotic lawnmowers. This is accomplished by a basic method as outlined in fig 6 in which the robotic lawnmower 1 detects 51, using the camera 11, a sub-field 37 in the work area 31 which contains mulchable non-grass matter, cf. fig 3. A border 34 of the sub-field is determined 53, cf. fig 4. Then, the lawn is processed 55 while substantially remaining inside this border 34 until a predetermined condition is met. Subsequently, the robotic lawnmower exits the sub-field.

Compared to a scenario where a robotic lawnmower simply cuts a lawn and, accidently, occasionally mulches some leaves in the process, this method provides advantages. A sub-field 37 of leaves can be detected by the camera as soon as a significant number of leaves per square meter is present, and the robotic lawnmower can process those leaves completely before the ground becomes covered with a thick layer of leaves. Such a thick layer usually cannot be processed without forming big, often wet, lumps of mulched matter that may not be absorbed at all into the lawn without a manual intervention. That is, if the robotic lawnmower is at all capable of processing such a thick layer. For instance, a single apple tree (Malus) may produce hundreds of litres of leaves, often forming a layer of leaves 5 cm thick or more. With the present method, those leaves can be progressively processed as they fall from the tree, often during a week or more, and provide the desired outcome with a finely mulched product that is easily absorbed by the lawn without interventions from the user.

Fig 3 illustrates the work area 31 of fig 2, where a tree, the trunk 35 of which is indicated, has released a lot of leaves in a sub-field 37 of the lawn. The robotic lawnmower 1 may detect this sub-field 37 using the camera 11 when passing by while mowing the lawn. However, rather than just randomly discovering the field, the control unit 9 of the lawnmower 1 may in different ways actively control the lawnmower to visit areas where leaves can be released. To start with, a user can direct the robotic lawnmower 1 towards the sub-field 37 for instance by placing a marker in the area in question in a user interface, thereby transmitting a corresponding position to the robotic lawnmower 1, that may subsequently check the position in the lawn for mulchable non-grass matter.

Once a sub-field 37 has been processed it is possible to return to the location in question after a pre-determined time period has passed, i.e. a day or two, to check for new leaves. This facilitates the progressive mulching of leaves as they fall from a tree. It is also possible to let the robotic lawnmower 1 detect and remember positions of trunks 35 of trees and to intermittently visit such positions to check for leaves during the part of the season when falling of leaves can be assumed to take place, typically during September and October in the northern hemisphere.

The detecting of the sub-field 37 containing leaves may be based on feeding image data from the camera 11 to a machine learning algorithm which is trained to detect a field of leaves on a lawn background. It should be noted that much simpler detection algorithms are possible, such as basing the detection on the average colour content in the camera's field of view. Colours of fallen leaves, typically yellow-red-brown, contrast significantly on a green lawn.

The robotic lawnmower 1 may typically move around to acquire images from different directions in order to determine the border 34 of the sub-field 37, cf. fig 4.

It is also possible to determine the border during processing of the field, as will be discussed.

When this is done, the lawn in the sub-field 37 is processed. This may be done using the existing lawn-cutting implement on the lawnmower in the normal way. However, it is possible to run a lawn-cutting implement in an adapted mulching mode during this phase, for instance with an increased knife rotation speed. It is also possible to move the robotic lawnmower slower during this phase to somewhat reduce the load on the processing implement. The lawnmower 1 remains substantially within the border 34 of the sub-field 37, but may move outside the border 34 to some extent, typically up to 0.5 m. Expressed differently, the border 34 may enclose the leaf-covered sub-field 37 with a corresponding margin and the lawnmower 1 may remain inside the border 34. This may be useful for instance to spread the mulched matter to a somewhat larger surface, thereby further facilitating absorption of the mulched matter into the lawn. When the pre-determined condition is met the robotic lawnmower exits the sub-field 37, where the non-grass matter has been mulched as indicated in fig 5.

As illustrated in fig 4 the sub-field 37 may be systematically processed, as shown line-by-line, while avoiding obstacles such as the tree trunk 35. It would however also be possible to process the sub-field in a pseudo-random fashion which implies a longer processing time but may avoid a "stripy" look when the sub-field 37 has been processed.

If the border 34 is defined during processing of the sub-field 37, the camera may be used to determine that the robotic lawnmower is about to leave the sub-field, simply by the number of leaves in view becoming lower, or the average colour of the ground in view becoming too green in relation to a threshold. The robotic lawnmower may then change its heading much as a legacy-type lawnmower does when reaching a boundary cable, i.e. making an almost 180 degrees turn but, not exactly at 180 degrees, so as not process the same line again.

The robotic lawnmower will remain within the sub-field 37, at least substantially remaining inside the border 34, while processing the lawn until a predetermined condition is met. This condition corresponds to the leaves in the sub-field 37 being sufficiently processed for the time being.

As one alternative, the predetermined condition corresponds to a processing time depending on the size of the sub-field, such as 100 s/m² as one example. This requires the size of the sub-field to be explicitly determined.

Alternatively, the predetermined condition could correspond to a processing state as detected by means of the camera. It is possible for instance to detect that leaf fragments in the sub-field have a small enough average size after processing using images from the camera.

It would also be possible to determine that the predetermined condition is met when the average resistance experienced by the processing means falls below a pre-determined resistance threshold. The resistance may correspond to a knife motor current required to carry out the processing.

The present disclosure is not restricted to the above-described examples and may be varied and altered in different ways within the scope of the appended claims.

## Claims

1. A method for operating a self-propelled robotic lawnmower (1), the lawnmower being configured to operate in a work area (31), and comprising driving means (3), processing means in the form of one or more knives (7), and a camera (11), the method **characterized by:**
- detecting (51) a sub-field (37) within the work area (31)containing mulchable non-grass matter on the lawn using the camera;
- defining (53) a border (34) of the sub-field (37);
- processing (55) the lawn using the processing means, while substantially remaining inside the border (34), until a predetermined condition is met, and
- subsequently exiting (57) the sub-field.

2. Method according to claim 1, wherein the predetermined condition corresponds to a processing time depending on the size of the sub-field (37).

3. Method according to claim 1, wherein the predetermined condition corresponds to a processing state detected by means of the camera (11).

4. Method according to claim 1, wherein the predetermined condition corresponds to a processing state detected by the processing means resistance falling below a threshold.

5. Method according to claim 1, wherein the mulchable non-grass matter is leaves.

6. Method according to claim 1, wherein, after exiting the sub-field, the lawnmower returns to the sub-field (37) after a predetermined time.

7. Method according to claim 1, wherein the robotic lawnmower (1) initially receives a position indication for a sub-field containing mulchable non-grass matter.

8. Method according to claim 1, wherein the robotic lawnmower (1) is configured to detect a trunk of a tree in an image received by the camera (11), and to subsequently visit an area containing the trunk to scan for mulchable non-grass matter.

9. A self-propelled robotic lawnmower (1), the lawnmower being configured to operate in a work area (31), and comprising driving means (61, 3), processing means (63, 7) including one or more knives (7), and a camera (11), **characterized by** the self-propelled robotic lawnmower (1) being configured to:
- detect (51) a sub-field (37) within the work area (31) containing mulchable non-grass matter on the lawn using the camera;
- define (53) a border (34) of the sub-field (37);
- process (55) the lawn using the processing means while substantially remaining inside the border (34) until a predetermined condition is met, and
- subsequently exit (57) the sub-field.

10. Lawnmower according to claim 9, wherein the predetermined condition corresponds to a processing time depending on the size of the sub-field (37).

11. Lawnmower according to claim 9, wherein the predetermined condition corresponds to a processing state detected by means of the camera (11).

12. Lawnmower according to claim 9, wherein, after exiting the sub-field, the lawnmower is configured to return to the sub-field (37) after a predetermined time.

13. Lawnmower according to claim 9, wherein the robotic lawnmower (1) initially receives a position indication for a sub-field containing mulchable non-grass matter.

14. Lawnmower according to claim 9, wherein the robotic lawnmower (1) is configured to detect a trunk of a tree in an image received by the camera (11), and to subsequently visit an area containing the trunk to scan for mulchable non-grass matter.
